# EUROPEAN PATENT SPECIFICATION

(11) **EP 3 395 637 B1**
(45) Date of publication and mention of the grant of the patent: **30.12.2020**
(21) Application number: 17814354.1
(22) Date of filing: 16.06.2017
(51) Int. Cl.: B61B 3/02, B61B 5/02, E01B 25/00, F16L 3/08, F17D 1/00

(54) **COMMUNICATIONS SYSTEM**
KOMMUNIKATIONSSYSTEM
SYSTÈME DE COMMUNICATIONS

(30) Priority: 20.06.2016 EA 2016006
(43) Date of publication of application: 31.10.2018
(73) Proprietor: Yunitski, Anatoli Eduardovich, Gomel 246007 (BY)
(72) Inventor: Yunitski, Anatoli Eduardovich, Gomel 246007 (BY)
(74) Representative: Pes, Matteo
(86) International application number: PCT/BY2017/000013
(87) International publication number: WO 2017/219114

(56) References cited:
- EP-A1- 0 030 647
- RU-C1- 2 224 064
- RU-C2- 2 520 983
- US-A- 3 012 521
- US-A- 3 447 481
- US-A- 4 489 659
- US-A1- 0 295 727
- US-A1- 2013 233 934

## Description

### Technical field

The invention relates to the area of transport and communications systems, in particular, to the integrated aboveground transport systems of a truss type, with a communication structure, which provides freight and passenger transportation, the location of power supply and communications lines, as well as transportation of liquid and gaseous media.

### Background Art

The structures of transport and/or communications systems based on trusses (truss structures) have been known for a long time. The transport system [1] is known, whose track is formed with a truss of triangular cross-section, whereas the transport module, comprising two carriages rigidly connected with each other and including the truss, moves along the rail installed on the top of the truss cross-section. To maintain the balance, the module also rests on two other rails installed on the truss sides.

The structure of truss transport [2] is known, representing a track formed with the tubes of circular or rectangular cross-section, or profiles (I-beams, channel sections, etc.) and connected with each other by means of trusses having a triangular profile in cross-section. The movement of transport modules or trains can be carried out along the supporting rails (main length of rails) installed in its lower part, whereas the vertical stabilization of the carriages is due to the contact between their carrying wheels and carrying rails (auxiliary rail cords), located in its upper part. Both the supporting and carrying rails can be simultaneously load-bearing elements of trusses. The track can be covered with a housing, which protects it from atmospheric precipitation. The trusses rest on supports, which look either like pillars of tubular cross-section that can be made telescopic for the convenience of their height adjustment in order to adapt the track to surface irregularities, or like framed structures similar to high-voltage power lines pylons.

The main advantage of the known truss structures is that the track structures built on their basis practically do not occupy land area, since the trusses located above the urban development or natural landscape are lighter than alternatively used reinforced concrete overpasses and do not require massive pillars, earth embankments, etc. for their support. A truss track located along the existing highway will practically not go beyond the limits of a road median between traffic flows. When the track goes through deep gorges, ravines, deep river-beds, the supports can be made using a rope suspension. As a result, traffic intensity on highway is decreased, without increasing a number of traffic lanes; there emerges a possibility of transport service for regions with a challenging terrain; the costs for the transport system assembly and operation are reduced. An internal space of trusses can be used to lay power lines, outdoor lighting lines, telephone cables, as well as for passenger boarding/alighting or evacuation from the rolling stock in case of emergency. The track supports can also be used to locate outdoor lighting lamps.

The general drawback of the specified truss structures is the abundance of connecting elements located in several planes with multiple junctions, which makes the structure heavy and bulky. This leads to an increased material consumption for the supports carrying the trusses, with the supports installed at a small distance from each other (small spans).

The further development of truss transport structures happened due to the elaboration and implementation of pre-stressed string-rod components therein.

The Yunitski's transport system [3] is known, with the track structure in the form of a pre-stressed string-rod truss. The main and auxiliary rail cords in it are made with a pre-stressed load-bearing member and located at different levels between the adjacent supports. They are connected with each other by a sequence of rod elements regularly oriented in a zigzag manner. The longitudinal axes of the rod elements together with the longitudinal axes of the main and auxiliary rail cords form triangles.

Thanks to the combination and interrelation between the properties of a pre-stressed track structure and the properties of constructions having structural stiffness (e.g., conventional rod-like frames), the longitudinal rigidity of the system is increased. Moreover, it becomes possible to increase spans between the supports up to 50...100 m and more, practically at a zero sag of the main cord. This enables to build transport systems with both multirail and monorail track structures.

An auxiliary rail cord in the known transport system can be made as a load-bearing member, either without a solid body (when the body transforms into a multitude of connecting shells spaced along the load-bearing member), or with a solid extended body comprising a load-bearing member. In the latter case, an auxiliary rail cord (one or more), being located under the main cord in the same plane with it, can be used as a retaining rail, which has a lateral rolling surface for spatial orientation of wheeled vehicles for the monorail-type system.

However, the known transport system has insufficient lateral rigidity, whereas the rail cord structure does not allow to achieve the required evenness of the track structure when organizing high-speed movement.

The Yunitski's transport system [4] is known, taken as a prototype. It comprises at least one trussed track structure, which includes at least one main length of rail cord installed on the foundation resting on the supports, and at least one auxiliary rail cord located at a different level. The main length of rail cord is made as a pre-stressed load-bearing member enclosed in the extended body, with the rolling surface for wheeled vehicles adjacent to it. The auxiliary rail cord is made as a pre-stressed load-bearing member enclosed in the body. The main and auxiliary rail cords are connected with each other at spans between the adjacent supports by a sequence of rod elements oriented in a zigzag manner. The rod elements are placed on the external sides of the main and auxiliary rail cords and form triangles with them. The left and right cords are additionally connected with each other at every level by means of cross bulkheads installed in the assemblies of rod elements and cords.

The rail cord of the known transport systems is formed by the rails of a string type stretched between anchor supports. The common feature of these rails is the presence of an extended body with the rolling surface connected therewith, and with the pre-stressed longitudinal load-bearing member enclosed therein. The rolling surface can be formed by the body surface itself, for example, in the form of its upper part - a head; or it can be formed by a rail or a head of a surface mount type connected with the body. In any of the embodiments, the rolling surface connected with the body forms a smooth track for the vehicle carrying wheels, each of them giving vertical load on the track structure.

The common drawback of the known truss structures comprising rail cords combined into a track is relatively high material consumption due to the presence of a large number of connecting elements in the form of cross bulkheads; consequently, such a system has a complicated and labor-consuming assembly technique.

The abundance of connecting elements and, consequently, their assemblies with rail cords does not allow to provide the sufficient lateral rigidity and elastic stability (monolithic character) of the system and, therefore, its safety.

Another drawback of the known designs of rail cords combined into a track is related to the fact that the rolling surface, formed by the body surface as its upper part - a head, or formed by a rail or a head of a surface mount type connected with the body, is always located only on one side - on the upper body part. The rolling surface connected with the body forms a smooth track for carrying wheels of a vehicle. Each of the carrying wheels gives vertical load on the track structure, failing to provide the sufficient properties associated with smoothness and softness of vehicle motion, especially when arranging high-speed motion.

US 0295727 discloses one trussed track structure consisting of at least one main length of rail cord installed on the foundation resting on the supports, and at least one auxiliary rail cord located at a different level. The main length of rail cord at the span between the adjacent supports is connected with the auxiliary rail cord by a sequence of regularly oriented rod elements, which longitudinal axes together with the longitudinal axes of the main and auxiliary rail cords form triangles, with the tops in the connections of rod elements regularly distributed with each other, and alternately - with the main and auxiliary rail cords. The main length of rail cord comprises two rail bodies lying opposite relative to the median plane and connected with each other, between which the main beam is placed. The connections of the regularly oriented rod elements and the main length of rail cord throughout the whole length of the trussed track structure are rigidly connected with the main beam located between the rail bodies. The main beam, in its turn, is rigidly connected with the opposing bases of two rail bodies.

### Summary of invention

The task of achieving the following engineering purposes lies at the heart of the invention:
- stabilization of the transverse size of the tread along the whole length of the rail track due to increasing the track structure lateral rigidity;
- increased elastic stability and reliability of the communications system;
- improvement of physical and operational characteristics of the communications system, enhancement of the overall structural rigidity of the track structure and evenness of the rail track;
- improvement of the qualities related to the smooth and soft vehicle movement;
- expansion of functional capabilities of the communications system.

The technical results in accordance with the object of the invention are achieved by means of the communications system, which comprises at least one trussed track structure. The track structure comprises at least one main length of rail cord installed on the foundation resting on the supports, and at least one auxiliary rail cord located at a different level. The main length of rail cord is made as a pre-stressed load-bearing member enclosed in the extended body, with the rolling surface for wheeled vehicles adjacent there. The auxiliary rail cord is made as a pre-stressed load-bearing member enclosed in the extended body. In this case, the main length of rail cord is connected with the auxiliary rail cord at the span between the adjacent supports by a sequence of regularly oriented rod elements. The longitudinal axes of the rod elements together with the longitudinal axes of the main and auxiliary rail cords form triangles with the tops in the assemblies of the rod elements regularly distributed with each other, and alternately - with the main and auxiliary rail cords.

In the Yunitski's communications system the main length of rail cord comprises two rail bodies lying opposite relative to the median plane and connected with each other, between which the main beam is placed; the assemblies of the regularly oriented rod elements and the main length of rail cord are rigidly connected, along the whole length of the trussed track structure, with the main beam located between the rail cords. The main beam is, in its turn, rigidly fixed to the opposing bases of two rail bodies. In this case, the height *h*, m, of the main length of rail cord body and height *H*, m, of the trussed track structure are correlated as follows: $5 \leq H / h \leq 50 ,$ whereas the rolling surfaces made at an angle to the horizon within 0 to 45°, forming the main rail track for wheeled vehicles, are adjacent to the rail bodies.

Furthermore the main length of rail cord comprises two rail bodies lying opposite relative to the median plane and connected with each other; the assemblies of the regularly oriented rod elements and the main length of rail cord are connected, along the whole length of the trussed track structure, with the opposing bases of the rail bodies;

in this case, the height *h*, m, of the main length of rail cord body and height *H*, m, of the trussed track structure are correlated as follows: $5 \leq H / h \leq 50 ,$ whereas the rolling surfaces made at an angle to the horizon within 0 to 45°, forming the main rail track for wheeled vehicles, are adjacent to the rail bodies.

The main beam comprises an extended body preferably in the form of a circular or shaped tube. Here, at least one pre-stressed load-bearing member can be placed in the main beam body.

Alternatively, the main beam can be made without placing the load-bearing member in its body (the tube is hollow). This also corresponds to the cases when the main beam body, in less preferable cases, is represented in cross section as an I-beam or channel section, or a combination of strips.

The rolling surfaces made at an angle to the horizon within 0 to 45°, forming an auxiliary rail cord track for wheeled vehicles, are adjacent to the rail bodies of the auxiliary rail cord.

The engineering purposes are achieved by the fact that any of the rail bodies relating to the main or auxiliary rail cord both according to both the first and second embodiment of the communications system, in their cross section, most often, looks like a closed profile, filling or not filling the space inside the mentioned bodies with the load-bearing members.

The load-bearing members of the main beam and/or auxiliary beam, and/or rail bodies, are made by placing the load-bearing structure, comprising pre-stressed extended elements, in the corresponding bodies of the main beam and/or auxiliary beam, and/or rail bodies, filling the cavities in the bodies between the load-bearing structure elements with a hardening material based on polymer binders, composites or cement mixtures.

Here, the stressed extended elements of the load-bearing structure are made of steel wire and/or rods, and/or steel twisted or untwisted cables, and/or cords, strips, bands or pipes.

The achievement of the engineering purpose is also provided by the fact that the load-bearing members of the main and auxiliary rail cords relating to the first and second embodiments of the invention, are stretched onto anchor supports with the force based on the ratio: 0.2 ≤ *T₁*/ *T₂* ≤ 5,
where: *T₁*, kgf - tension force of load-bearing members for the main length of rail cord;
*T₂,* kgf - tension force of load-bearing members for the auxiliary rail cord.

The achievement of the engineering purposes is also provided by the fact that any of the rail bodies relating to the main or auxiliary rail cord according to both the first and the second embodiment of the communications system, is represented as an open profile or a strip in cross section.

A trussed track structure comprises the main length of rail cord and the auxiliary rail cord located at a different level. The main length of rail cord is made in the form of two rail bodies of the main cord with pre-stressed load-bearing members forming a rail track. The rail bodies of the main cord are rigidly connected by means of an extended main beam according to the first embodiment (or without it - according to the second embodiment). The auxiliary rail cord is made in the form of an auxiliary beam with a pre-stressed load-bearing member, connecting two rail bodies of the auxiliary rail cord (or without them). The track structure in cross section comprises the following cross section areas: *S*₁, m² - of the main beam (if present), *S*₂, m² - of the rail bodies for the main length of rail cord, *S*₃, m² - of the auxiliary beam and *S*₄, m² - of the rail bodies for the auxiliary rail cord (if present), based on the correlation: $0.2 \leq \frac{{S}_{1} + {S}_{2}}{{S}_{3} + {S}_{4}} \leq 5 .$

The regularly oriented rod elements can be made profile (shaped) with cross section in the form of a tube or a T-beam, I-beam, channel section, angle or a strip.

Depending on the design solution for the wheeled vehicles and the track structure, the rolling surfaces for wheeled vehicles adjacent to the rail bodies of the main length of rail cord and/or the auxiliary rail cord are located on the upper and/or lower, and/or side external surfaces of the rail bodies.

Along with this, the main length of rail cord body, particularly the internal tube cavity relating to it, which looks like the main beam body, can be made with a possibility of locating power supply and communications lines therein, and/or for liquid or gas transportation. For this, a communication and transport channel can be placed in the tube body to lay a pipeline for liquids or gas transportation, and/or to locate power supply and/or communications lines.

The internal cavity of the tube body relating to the auxiliary rail cord, which looks like an auxiliary beam body, can be made with a possibility of locating power supply and communications lines in it, and/or for liquid or gas transportation. For this, a communication and transport channel can be placed in the tube body to lay a pipeline for liquids or gas transportation, and/or to locate power supply and/or communications lines.

Communication and transport channels can be placed inside the rail bodies of the main length of rail cord and/or auxiliary rail cord, with a possibility of locating a pipeline in them to transport liquids or gases and/or power supply and communications lines.

The rail bodies of the main length of rail cord and/or auxiliary rail cord can also comprise communication channels with a possibility of locating power supply and communications lines in them.

### Brief description of drawings

The essence of this invention is clarified through the drawings in Fig.1-Fig.12, which illustrate the following:
Fig. 1 - A communications system - general view;
Fig. 2 - cross section of the trussed track structure, where the connecting assemblies of the regularly oriented rod elements and the main length of rail cord are rigidly connected with an extended body of the main beam placed between the rail bodies;
Fig. 3 - cross section of the trussed track structure, where the connecting assemblies of the regularly oriented rod elements and the main length of rail cord are rigidly connected with the opposing bases of two rail bodies;
Fig. 4 - schematic drawing of the longitudinal bond section, with an extended body (located between the rail bodies) of the main beam for the assembly of regularly oriented rod elements with the main length of rail cord;
Fig. 5 - schematic drawing of the longitudinal bond section with the opposing bases of two rail bodies of the assembly of regularly oriented rod elements with the main length of rail cord;
Fig. 6 - cross section of the trussed track structure of the invention where the auxiliary rail cord is made with two rail bodies and the auxiliary beam between them;
Fig. 7 - cross section of the trussed track structure, where the main length of rail cord forms the upper chord of the truss structure and the auxiliary rail cord - the lower chord;
Fig. 8 - cross section of the main length of rail cord made with the main beam as a channel section;
Fig. 9 - cross section of the main length of rail cord made with the main beam as an I-beam;
Fig. 10 - cross section of the main length of rail cord made with the rail bodies in the form of strips;
Fig. 11 - cross section of the main length of rail cord made with the rail bodies in the form of open profiles;
Fig. 12 - cross section of the trussed track structure, where the main length of rail cord is made with the rail bodies in the form of closed profiles, and the auxiliary rail cord is designed without a body.

### Detailed description of the invention

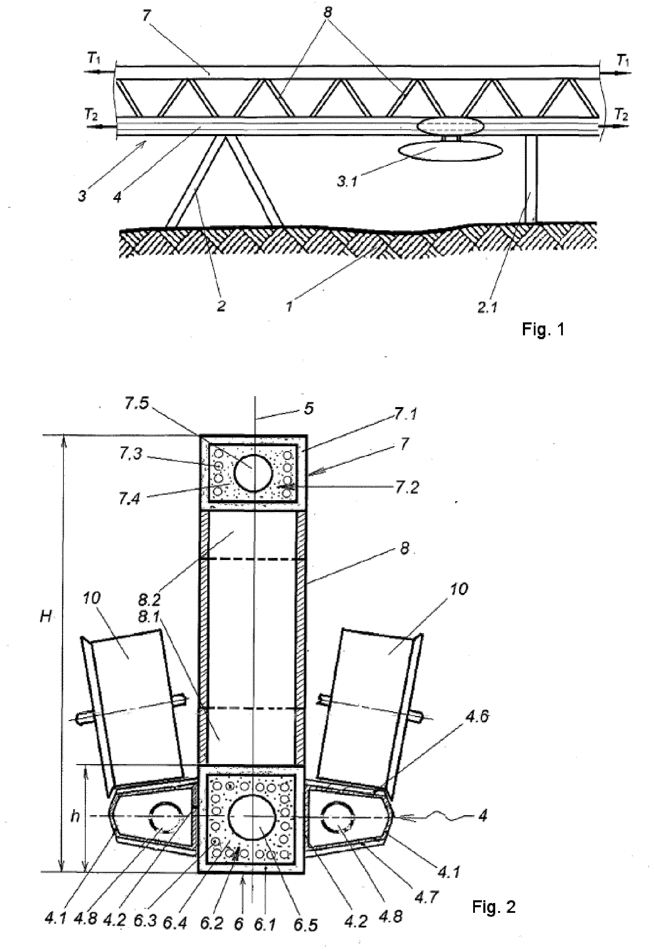

The communications system (the general view is shown in Fig. 1) comprises anchor supports 2 and intermediate supports 2.1 spaced apart along the track on ground foundation 1. Suspended sections of one or more trussed track structures 3 fixed above the foundation between the supports, forming spans, are located on the supports.

The design of supports 2 can vary depending on the place of installing the support and its purpose. Consequently, the supports can be anchor - spaced apart for large distances, and intermediate - installed at shorter spans between anchor supports. Various structures can be used as supports - tube concrete foundations, trusses of various design, buildings, specially equipped boarding and loading platforms located between loading and unloading stations - passenger for passenger tracks, and freight for freight tracks.

The upper part of supports can be equipped with special caps (not shown in the figure) designed for the location of transition track sections on them, and/or components placed in the communications system structure - a pipeline to transport liquids or gas, and/or power supply and communications network, as well as for fastening (anchoring) of stretched elements of the track structure load-bearing members in caps of anchor supports.

Anchoring devices for load-bearing members (and the trussed track structure on the whole) in anchor supports caps involve any known devices, similar to those used in hanging and cable-stayed bridges, cableways and pre-stressed reinforced concrete structures for fastening (anchoring) of stretched load-bearing members (reinforcement, ropes, high-tensile wires, etc.).

The shape of pier caps with anchoring devices for load-bearing members, elements of pipelines and communications network on anchor supports installed at track turns, at linear track sections, in the mountains or at track ends can be different. This is due to the fact that the mentioned devices determining the direction for the transition track section shall be smoothly connected with suspended track sections in spans between the supports.

In addition, the shape of anchor supports caps can be determined by the fact that they are the places for locating loading and unloading stations, hubs for the arrangement of junctions (turnout switches and turns) of the track structure and hubs for branching the communications system pipelines.

Apart from that, anchor supports 2 can be combined with buildings and construction facilities (residential, production, office, trade and others).

The trussed track structure 3 is designed to place rolling stock 3.1 (passenger and/or cargo, and/or cargo-passenger), which can be either suspended to the track structure from below or mounted on the track structure above (not shown in the figure).

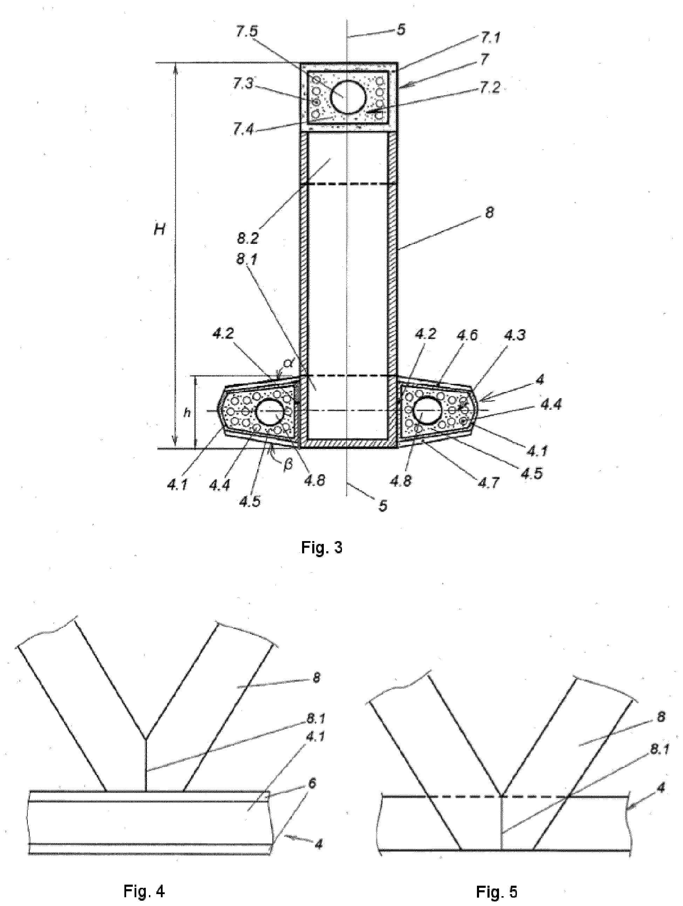

The trussed track structure 3, whose cross-section is represented in two preferable embodiments according to Fig. 2, Fig. 3, as well as Fig. 6 - Fig. 9, comprises the main length of rail cord 4 and auxiliary rail cord 7 located at a different level from the main length of rail cord 4. The main length of rail cord comprises either two rail bodies 4.1 lying opposite relative to median plane 5 and connected with each other, between which an extended body 6.1 of main beam 6 (Fig. 2) is placed according to the first embodiment, or two rail bodies 4.1 (Fig. 3) lying opposite relative to median plane 5 and connected with each other, without the main beam according to the second embodiment.

The main length of rail cord 4 and auxiliary rail cord 7 are connected with each other by a sequence of regularly oriented rod elements 8. The longitudinal axes of rod elements together with the longitudinal axes of the main rail and auxiliary rail cords form triangles so that the specified sequence of rod elements 8 has a profile of longitudinal section, representing a periodic function, particularly a serrated or sinusoidal profile. In this case, connecting assemblies 8.1 of regularly oriented rod elements with the main length of rail cord are arranged along the main length of rail cord (along the main truss chord). These assemblies look like tops of triangles formed in the projection by longitudinal axes of rod elements 8 and the main length of rail cord (Fig. 4, 5). Connecting assemblies 8.2 of regularly oriented rod elements with the auxiliary rail cord are arranged along the auxiliary rail cord of the auxiliary chord. These connecting assemblies look like tops of triangles formed by longitudinal axes of rod elements 8 and the auxiliary rail cord 7.

Here, the main condition for providing transverse stability of the truss structure is that the conventional median plane 5 passing through connecting assemblies 8.1 of regularly oriented rod elements with the main length of rail cord, and through connecting assemblies 8.2 of regularly oriented rod elements with the auxiliary rail cord, is located between bases 4.2 of extended rail bodies 4.1 of the main length of rails.

In one embodiment connecting assemblies 8.1 of regularly oriented rod elements 8 with the main length of rail cord 4 are rigidly connected with an extended body 6.1 of main beam 6 located between rail bodies 4.1. The main beam, in its turn, is rigidly connected with the rail bodies of the main length of rail cord, as shown in Fig. 2 and Fig. 4. Along the whole length of track structure 3, rail bodies 4.1 of the main length of rail cord 4 are fixed with their bases 4.2 on lateral sides of body 6.1 of main beam 6, lying opposite relative to median plane 5, forming with it the main length of rail cord (Fig. 2).

In other embodiments connecting assemblies 8.1 of regularly oriented rod elements 8 with the main length of rail cord 4 are rigidly connected along its entire length with bases 4.2 of the extended rail bodies 4.1 for the main length of rails, as shown in Fig. 3 and Fig. 5.

Both above-mentioned embodiments of the truss structure are due to the differences in providing rigid connection between the main length of rails required for the formation of the rail track and are not mutually exclusive from the perspective of achieving the technical result.

The embodiment comprising the main beam 6 in the main chord - between bases 4.2 of rail bodies 4.1 for the main cords - makes the track structure heavier and increases its material consumption. However, it provides greater rigidity of the truss structure and, consequently, enhances the longitudinal evenness of the track. In addition, it allows to reduce the number of supports 2 on the foundation and increase the span length between them.

An other embodiment comprises a rigid connection of rail bodies 4.1 for the main length of rails by means of direct fastening of their bases 4.2 with connecting assemblies 8.1 of regularly oriented rod elements 8 along the whole length of the track structure in the main chord, decreases the track structure material consumption and mass. In addition, it provides greater elasticity of the truss structure.

Both embodiments can be applied separately or simultaneously within one truss structure, when the sections of the communications system comprising the main beam 6 between rail bodies 4.1 alternate with the sections of the truss structure, implemented without a beam between the mentioned rail bodies, which are connected with each other by fastening connecting assemblies 8.1 of regularly oriented rod elements 8 on bases 4.2 for the lying opposite rail bodies 4.1 of the main cord.

Both embodiments are characterized by the fulfillment of the condition: height *h*, m, of the main length of rail cord body and height *H*, m, of the trussed track structure are correlated by: $5 \leq H / h \leq 50 .$ (1) The values of the upper and lower limits of the specified two-sided inequality are determined by design allowed relations between the elastic properties of the trussed track structure and its transverse stability, and mainly depend on the materials used to manufacture the truss structure, the types of cross section profiles for rod elements 8, main beam 6 and auxiliary rail cord 7.

The main beam 6, auxiliary rail cord 7 - both or either of them - are preferably made in the form of a tube, which body 6.1, 7.2, correspondingly, can be circular or shaped in cross-section. A shaped tube is a closed channel with a section other than circular. The main beam 6, auxiliary rail cord 7 - both or either of them - in the form of a shaped tube in any of the preferred embodiments can be made with a rectangular (square), polygonal or oval cross-section. A shaped tube is preferably made of roll-formed closed steel fabricated section. The main distinctive feature of this tube from a circular one is its flat faces; technically - its higher strength and rigidity. However, the specific weight of a running meter for a shaped square tube is higher than for a circular one.

A square shaped tube manufactured from alloy or carbon steel, in contrast to a circular tube, provides higher durability of truss structures and metal structures. However, a square tube is characterized by a less wind shape compared to a circular tube. A circular tube possesses a good wind shape; therefore, the wind pressure is less, which is important for high truss structures. In addition, little hoar frost or moisture ever stays on circular tubes, therefore they are more rust-resistant. The choice of a circular or another tube profile for the construction of the Yunitski's communications system is determined by the initial conditions for designing the system.

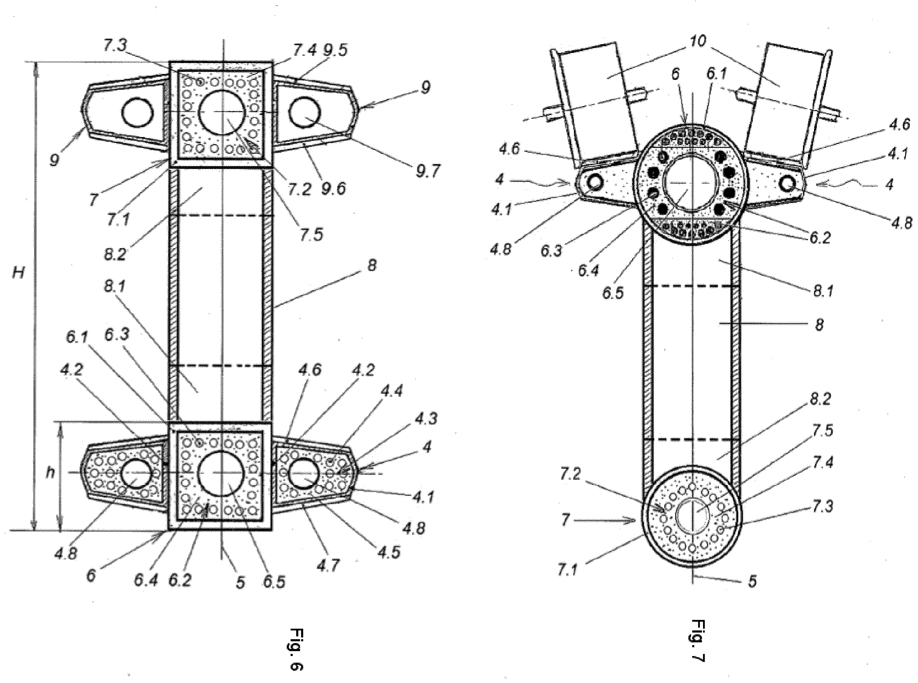

The main beam 6 and auxiliary rail cord 7 - both or either of them - with a tubular design of their bodies, look like an assembled structured construction, which comprises a pre-stressed (stretched) load-bearing member 6.2 of the main beam and/or load-bearing member 7.2 of the auxiliary rail cord, enclosed in body 6.1 of the main beam and/or body 7.1 of the auxiliary rail cord, correspondingly. (See Fig. 2 and Fig. 7).

The extended pre-stressed load-bearing members 4.3 of the rail cords can also be placed in the internal space of rail bodies 4.1 of the main cord (see Fig. 3, 6, 8 and 9). In this case, each of rail bodies 4.1 making the main length of rail cord, is represented as an assembled structured construction, which comprises a pre-stressed (stretched) load-bearing member 4.3 enclosed in the extended rail body 4.1 of the main length of rail cord 4.

The common feature of all load-bearing members is that load-bearing members 4.3 of the main length of rail cord 4, load-bearing member 6.2 of main beam 6 and load-bearing member 7.2 of auxiliary rail cord 7 are formed by placing pre-stressed extended elements 4.4 of the load-bearing structure of the main length of rail cord, extended elements 6.3 of the load-bearing structure of main beam 6 (tube) and extended elements 7.3 of the load-bearing structure of auxiliary rail cord 7 (tube) in the corresponding bodies: in rail bodies 4.1, body 6.1 of main beam 6 and body 7.1 of auxiliary rail cord 7, correspondingly. This is done by filling the cavities in the bodies between elements 4.4, 6.3 and 7.3 of the load-bearing structure with hardening material 4.5 for the rail bodies of the main cord, hardening material 6.4 for the main beam and hardening material 5.4 for the auxiliary rail cord, correspondingly, based on polymer binders, composites or cement mixtures.

The common feature of all load-bearing members in different embodiments is also the fact that one or several bunches of load-bearing elements 4.4, 6.3 and 7.3 of the load-bearing structures, correspondingly, can be used as load-bearing members, whose cross section is shown in Fig. 2 and Fig. 3, for rail bodies 4.1 of main cord 4, main beam 6 and auxiliary rail cord 7. The load-bearing elements are made of high-strength steel wire or rods assembled as one bunch or spaced apart along the cross section of bodies cavities 4.1, 6.1 and 7.1, or as one or several standard twisted or untwisted steel cables, as well as cords, strands, strips, bands, tubes or other extended elements made of the known high-strength materials (not shown in the figures) in any combination. Cavities in the bodies between elements 4.4, 6.3 and 7.3 of the load-bearing structures of rail bodies 4.1 for main cord 4, main beam 6 and auxiliary rail cord 7 can be filled with hardening material 4.5, 6.4 and 7.4, correspondingly. The hardening material is based on polymer binders, composites or cement mixtures, which rigidly bind the load-bearing structures of load-bearing members 4.3, 6.2 and 7.2 into one unit with the corresponding bodies 4.1, 6.1 and 7.1 of main cord 4, main beam 6 and auxiliary rail cord 7, concreting each of the presented structures - truss structure components - into the solid structural element.

In a range of practical embodiments, the rail bodies, the main beam and the auxiliary rail cord - all together or separately, in any combination of their design variants - can be made without placing the load-bearing members in the mentioned bodies.

In some non-limiting cases of practical embodiment of the claimed communications system, the extended body of auxiliary rail cord 7 additionally comprises two rail bodies 9 of the auxiliary rail cord lying opposite relative to median plane 5 and connected with each other. Here, body 7.1 of the auxiliary rail cord turns into a connecting body 7.1 of the auxiliary beam, since it is designed for mutual rigid connection of two rail bodies 9 of the auxiliary rail cord (Fig. 6) located at one level symmetrically to median plane 5.

It is most preferable that body 7.1 of the auxiliary rail cord is made in the form of a circular or shaped tube, which can be manufactured with the placement of a pre-stressed load-bearing member 7.2 (similar to the main beam 6 in the communications system) or without placement of a load-bearing member in body 7.1 (the tube is hollow).

Connecting assemblies 8.2 of regularly oriented rod elements 8 with the auxiliary rail cord are rigidly connected with the extended body 7.1 of the auxiliary beam. The auxiliary beam body is, in its turn, rigidly connected with rail bodies 9, as shown in Fig. 6. In this case, rail bodies 9 of auxiliary rail cord 7 are fixed, along the whole length of track structure 3, on lateral sides of body 7.1 of the auxiliary beam lying opposite relative to median plane 5, forming an auxiliary rail cord track (Fig. 6).

Rail bodies 9 of auxiliary rail cord 7 can be manufactured without the placement of load-bearing members of load-bearing structures in them, i.e., they can be made hollow. The extended pre-stressed load-bearing members of the rail cords can also be placed in the internal space of the rail bodies for the auxiliary rail cord. In this case, each of rail bodies 9 related to the auxiliary rail cord looks like an assembled structured construction, identical to the structure of rail bodies 4.1 (the description is not provided due to their identity) related to the main length of rail cord, as described above, which comprises pre-stressed load-bearing members adjacent to rail bodies 9.

The main beam (if available), the rail bodies of the main cord located horizontally at one level, connected with each other and forming the main length of rail cord 4, represent the main chord of the truss structure, which can be both lower and upper, depending on the position relative to the auxiliary rail cord.

In its turn, auxiliary rail cord 7, including rail bodies 9 (if available) of the auxiliary rail cord, represents an auxiliary chord, which can be both upper and lower, depending on the position relative to the main length of rail cord 4, which is determined by the conditions of the specific design and engineering solution.

Fig. 7 shows the track structure embodiment, where the main length of rail cord forms the upper chord of the truss structure, and the auxiliary rail cord - its lower chord.

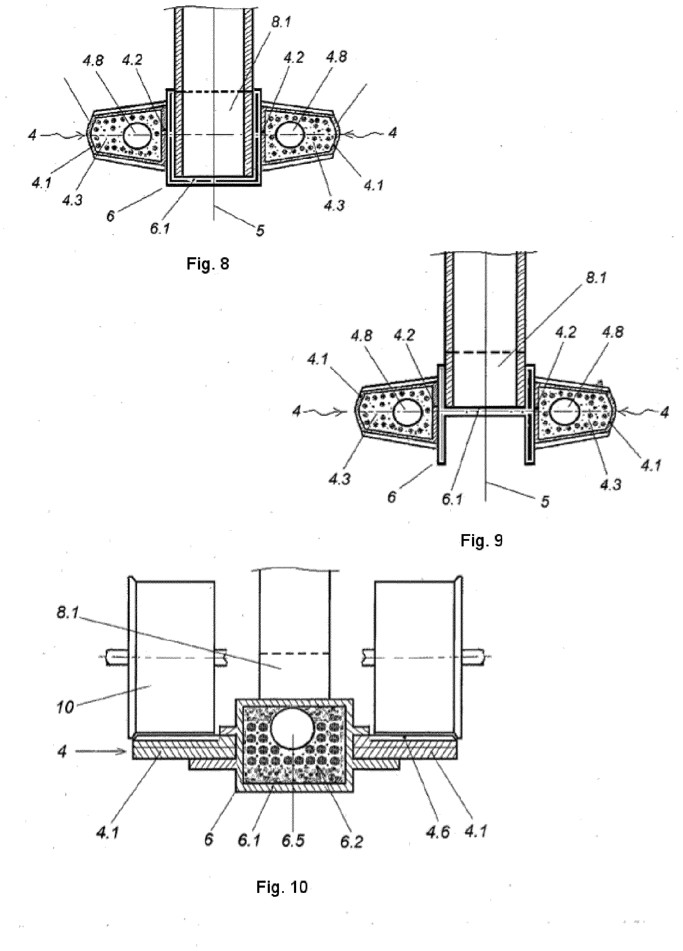

Alternatively, to the tubular design (with the placement of the load-bearing member or without it), main beam 6 can be presented in cross section in the form of a channel section (as shown in Fig. 8) or I-beam (Fig. 9) or a combination of strips. Such embodiment of the beam can be applied in cases, when there is no need to form a load-bearing structure with the formation of a load-bearing beam member, or there is no need to create pre-stressing of the beam body. The mutual alignment of main beam 6 with cross section in the form of a channel section and rail bodies 4.1 of main cord 4 is shown in Fig. 8, where connecting assemblies 8.1 of regularly oriented cross bulkheads 8 are rigidly connected with an extended body of the main beam-channel section placed between the rail bodies.

The mutual alignment of main beam 6 with cross section in the form of an I-beam and rail bodies 4.1 of main cord 4 is shown in Fig. 9, where connecting assemblies 8.1 of regularly oriented cross bulkheads are rigidly connected with an extended body of the I-beam placed between the rail bodies of the main length of rail cord.

Alternative to the tubular design (with the placement of the load-bearing member or without it), auxiliary rail cord 7 can also be manufactured with a profile cross section in the form of an I-beam or channel section, or a combination of strips (not shown in the figures), regardless of the embodiment of main beam 6. Such embodiment of the auxiliary rail cord can be applied in cases, when there is no need to form its load-bearing structure with the formation of the load-bearing member, or when there is no need to create pre-stressing of the auxiliary rail cord body.

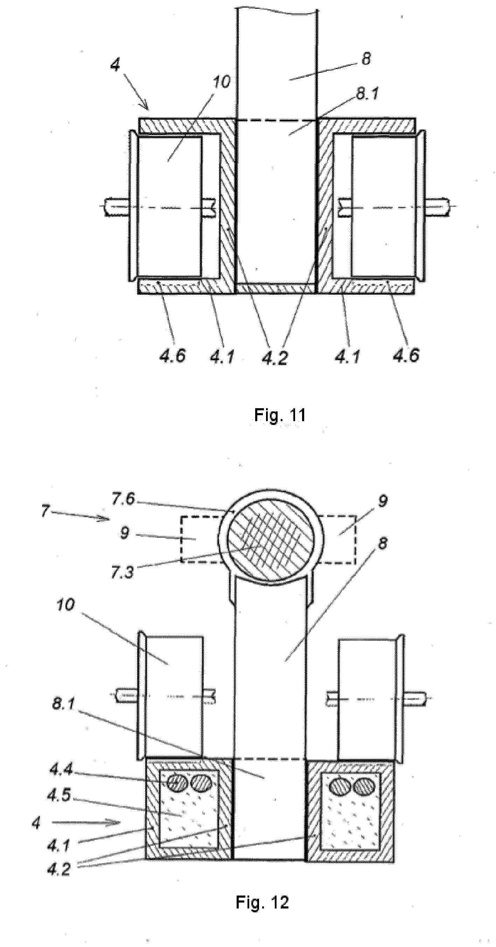

The engineering purposes are also achieved by the fact that any of the rail bodies related to the main or auxiliary rail cord according to the first and second embodiments of the communications system, in cross section can be implemented in the form of a strip, as shown in Fig. 10, or in the form of a profile - open (Fig. 11) or closed one (Fig. 12).

Rail bodies 4.1 can be made in the form of solid (single-layer) or multilayer strips (Fig. 10). The layers of such strips can look like extended stretched steel bands, cords, rods, strands, wire, etc., with the formation of a smooth rolling surface of the rail track for wheeled vehicles.

Figure 11 shows the cross section of the main length of rail cord made with the rail bodies in the form of open profiles. Here, rolling surface 4.6 of the main rail track can be arranged both inside the profile, on one of its internal surfaces, and on one or several external surfaces.

Apart from that, auxiliary rail cord 7 can be designed without a body. In this case, the auxiliary rail cord looks like a pre-stressed extended load-bearing structure comprising one or several stressed elements 7.3 (for example, a twisted or untwisted steel cable or steel cord, or extended bunch of wire).

Figure 12 shows the cross section of the trussed track structure, where the main length of rail cord is made with the rail bodies in the form of closed profiles, and the auxiliary rail cord is designed without a body.

In these cases, the auxiliary rail cord body transforms into ring elements 7.6, as shown in Fig. 12, securing the pre-stressed load-bearing structure. At the same time, in order to achieve the required structural rigidity of the truss structure chord comprising the auxiliary rail cord, there is provided a combination of the auxiliary beam embodiment without a body and rail bodies 9 of the auxiliary rail cord related thereto, preferably made in the form of a closed profile in cross section (shown in Fig. 12 in a dashed line). In these cases, at least one rail body 9 is fixed on the auxiliary rail cord through ring elements 7.6 securing the pre-stressed load-bearing structure of the auxiliary rail cord without a body.

Auxiliary rail cord 7 can be made without rail bodies 9 of the auxiliary rail cord (without the formation of the auxiliary rail cord track), or auxiliary rail cord 7 can be made with rail bodies 9 of auxiliary rail cord 7. In the latter case, rail bodies 9 of the auxiliary rail cord are rigidly connected with body 7.1 made in the form of an auxiliary beam, with the formation of an auxiliary rail cord track. Here, the connection between rail bodies 4.1 of main length of rail cord 4 is provided by means of main beam 6, whereas connecting assemblies 8.1 of regularly oriented cross bulkheads 8 are connected with the main beam body. According to another embodiment main beam 6 is not available, and the connection between rail bodies 4.1 of main length of rail cord 4 is provided directly by means of connecting assemblies 8.1 of regularly oriented cross bulkheads 8, whose opposite connecting assemblies 8.2 are connected with auxiliary rail cord 7 by means of auxiliary beam 7.1.

Following the distribution pattern of the weight load values between the main and auxiliary chords (the main and auxiliary rail cords), there are provided greater tension forces *T₂* of the load-bearing structures for its main length of rail cord (main chord) in relation to tension forces *T₁* of the load-bearing structures for the auxiliary rail cord (auxiliary chord), when forming the trussed track structure.

In this case, embodiments of the invention are characterized by the fact that the load-bearing members of the main and auxiliary rail cords, including the load-bearing members of the main beam and all rail bodies of the main and auxiliary rail cords are stretched onto anchor supports with the forces chosen based on the following ratio: $0.2 \leq {T}_{2} / {T}_{1} \leq 5 ,$ (2)
where *T₁*, N - tension force of the load-bearing members for the main length of rails;
*T₂*, N - tension force of the load-bearing members for the auxiliary rail cord.

The trussed track structure can be fixed to caps of supports 2 by any known means in the form of pre-assembled solid truss sections corresponding to the spans between the supports in terms of length, or element by element (when assembling at site), with a separate fixation of load-bearing structures of load-bearing members 4.3, 6.2, 7.2 for the main rail and auxiliary rail cords, and separately bodies 4.1, 6.1, 7.1, 9 of the main rail and auxiliary rail cords, correspondingly, with further unfastening of the main and auxiliary rail cords (by connecting the main and auxiliary chords) by a sequence of regularly oriented rod elements 8.

In any of non-limiting embodiments of the claimed communications system, it is possible to provide various non-exclusive combinations of filling the bodies of main beam 8, auxiliary rail cord 7 made in the form of tubes, as well as of all available rail bodies of the main and auxiliary rail cords. Particularly, any of the mentioned bodies can be fully or partially filled by placing in it elements of the corresponding load-bearing structure with the formation (as described above) or without the formation of a load-bearing member, as well as can be made without the placement of a load-bearing member in any of the mentioned bodies.

Regardless of the peculiarities of the truss communications system embodiment, it is required to comply with the condition, where the ratio between the chord cross section area, comprising the main length of rail cord, and the cross-section area of the auxiliary chord, comprising an auxiliary rail cord, lies in the range from 0.2 to 5, in order to provide its reliable and uninterrupted operation. That is, the values of cross section areas *S₁*, m² of the main beam (if available), *S₂*, m² of the main cord rail bodies, *S₃*, m² of the auxiliary rail cord, *S₄,* m² of the auxiliary rail cord bodies (if available) are chosen based on: $0.2 \leq \frac{{S}_{1} + {S}_{2}}{{S}_{3} + {S}_{4}} \leq 5 .$ (3) If main beam 6 and rail bodies 4 of the auxiliary rail cord are not present (Fig. 3), the condition (3) looks as follows: $0.2 \leq {S}_{2} / {S}_{3} \leq 5 .$ (4) In this case, each of the values of cross section areas *S*₁, m² of the main beam, *S*₂, m² of the main cord rail bodies, *S*₃, m² of the auxiliary rail cord, *S₄*, m² of the auxiliary rail cord bodies, comprises the cross-section area of the corresponding body and the total cross section area of all elements of load-bearing structures, forming load-bearing members, enclosed in the corresponding bodies of the trussed track structure.

The tendency of the specified area ratio to the lower limit value of correlation $\frac{{S}_{1} + {S}_{2}}{{S}_{3} + {S}_{4}} \to 0.2$ corresponds to particular cases, where the main length of rail cord bodies, including main beam 6 and rail bodies 4.1 of the main cord, are filled with load-bearing structure elements less than the auxiliary rail cord bodies are filled with load-bearing structure elements.

The tendency of correlation (3) to the upper limit value $\frac{{S}_{1} + {S}_{2}}{{S}_{3} + {S}_{4}} \to 5$ corresponds to particular cases, where, vice versa, the main length of rail cord bodies, including main beam 6 and rail bodies 4.1 of the main cord, are filled with load-bearing structure elements more than the auxiliary rail cord bodies are filled with load-bearing structure elements.

The finding of correlation (3) within stated limits determines the reliability of the truss structure in terms of its lateral stability.

In cases of making bodies of the main beam and/or auxiliary rail cord, and/or rail bodies without filling with load-bearing structure elements (load-bearing members), the mentioned bodies are fixed on caps of anchor supports 2 with pre-stressing. Here, the bodies perform the function of pre-stressed load-bearing members.

Regularly oriented rod elements 8 can be made with cross section profile in the form of a circular or shaped tube. Alternatively, regularly oriented rod elements 8 can be made profile in cross section in the form of any known profiles: T-beam, I-beam, channel section, angle section or strip, or all their possible combinations.

Depending on the design solution for wheeled vehicles and the track structure, the rolling surfaces for wheeled vehicles adjacent to the rail bodies of the main length of rail cord and/or auxiliary rail cord, can be located on the upper and/or lower, and/or side external surfaces of rail bodies.

The upper and lower external surfaces of rail bodies 4.1 of the main length of rail cord 4 are adjacent to the corresponding two rolling surfaces - upper 4.6 and lower 4.7 - with the formation of the main rail track for the movement of wheeled vehicles (see Fig. 2, 3, 6, 7). Upper rolling surfaces 4.6 of the main track are made at angle *α* to the horizon within 0 to 45°, lower rolling surfaces 4.7 are made at angle *β* to the horizon within 0 to 45° (see Fig. 3).

Similar to the main length of rail, the upper and lower external surfaces of rail bodies 9 of auxiliary rail cord 7 are adjacent to the corresponding two rolling surfaces - upper 9.5 and lower 9.6 - with the formation of the auxiliary rail cord track for the movement of wheeled vehicles (see Fig. 6). Upper rolling surfaces 9.5 of the auxiliary track are made at angle *α* to the horizon within 0 to 45°, lower rolling surfaces 4.7 are made at angle *β* to the horizon within 0 to 45° (see Fig. 6).

Operation of the trussed track structure as a system for transport movement is based on the fact that the upper rolling surfaces adjacent to the rail bodies of the main or auxiliary rail cords, form a rail track for carrying wheels 10, as shown in Fig. 2.7, whereas the lower rolling surfaces (if available) form a rail track for hold-down vehicle wheels (not shown in the figures), whose movement can be arranged by means of any known types of drives. Here, the rolling surfaces adjacent to the rail bodies are made at an angle to the horizon ranging within 0 to 45°.

In some embodiments of the trussed track structure, lower rolling surfaces 4.7 of the main track and/or lower rolling surfaces 9.6 of the auxiliary track can be absent. In this case, only upper rolling surfaces 4.6 of the main track and/or upper rolling surfaces 9.5 of the auxiliary track form the corresponding rail track for transport movement.

The lower value of a range of declivity angles *α* and *β* to the rolling surfaces horizon - from 0° - is determined by the condition of eliminating the contact between vehicles wheels and regularly oriented rod elements and/or beam body 6 during the movement of wheeled vehicles along the track structure.

The upper value of a range of declivity angles *α* and *β* to the rolling surfaces horizon - to 45° - is determined by choosing the resultant of the forces of traction, wheel rolling resistance, air resistance and others, which determines the best motion parameters.

In cross section, the profiles of rail cords bodies can be symmetrical in relation to the horizontal axis (angle *α* to the horizon of the upper rolling surfaces coincides with angle *β* to the horizon of the corresponding lower rolling surfaces) and asymmetrical in relation to the horizontal axis (angle *α* to the horizon of the upper rolling surfaces does not coincide with angle *β* to the horizon of the corresponding lower rolling surfaces).

The traction force, required to provide the movement of wheeled vehicles in the system, is provided by any of the known types of engines with the corresponding transmission and the driving (tractive) wheels drive.

In the preferred embodiment of the invention, regardless of filling or not filling the bodies of the main and auxiliary rail cords with the load-bearing structure, it is possible to place an extended communication and transport channel 6.5 and/or communication and transport channel 7.5 in body 6.1 of main beam 6 and/or in body 7.1 of auxiliary rail cord 7. Upon condition of design compliance with the requirements of environmental, sanitary and hygienic, fire and other kinds of safety, the mentioned channels can be made with a possibility of transporting the liquid or gaseous media. This allows to use them when organizing extended life-support systems for cities and populated areas (gas, water, heat supply systems), of both main and local significance. Apart from that, channels 6.5, 7.5 can be used for the location of extended pipeline elements in them to transport oil and oil products, or elements of gas pipeline system branches going in the same direction, for both main and local pumping of natural or liquefied gas. Along with or instead of this, communication and transport channels 6.5, 7.5 can be used for the location of communication lines and/or power supply network in them.

In the preferred embodiment of the invention, along with filling of rail bodies of the main length of rail cord with the load-bearing structure elements, with the formation of the load-bearing member, it is possible to place an extended communication channel 4.8 inside any of the main length of rail cord bodies. Upon condition of design compliance with the requirements of environmental, fire and other kinds of safety, it can be made with a possibility of placing extended communications lines and/or power supply network.

Apart from that, along with filling of rail bodies of the auxiliary rail cord with the load-bearing structure elements, with the formation of the load-bearing member, it is possible to place an extended communication channel 9.7 inside any of the auxiliary rail cord bodies 9. Upon condition of design compliance with the requirements of environmental, fire and other kinds of safety, it can be made with a possibility of placing extended communications lines and/or power supply network.

The described location of communication and transport channels 4.8, 6.5, 7.5, 9.7 in the corresponding bodies of the components of the claimed Yunitski's truss communications system provides the enhancement of its functional capabilities, significantly increases the material, economic and ecological efficiency due to one more subject matter of this invention - the application of the Yunitski's communications system for liquid or gas transportation.

The claimed subject matter of this invention is also the application of the Yunitski's communications system in the power supply and/or communications network.

### Industrial applicability

The construction of the claimed Yunitski's communications system comprises the installation of supports 2 on foundation 1, the suspension and stretching of load-bearing members 4.3, 6.2 (if main beam 6 is available) and 7.2 of the main rail and auxiliary rail cords between them, with regard to all available rail bodies of the rail cords, further fixing of the ends of load-bearing members in the corresponding levels of caps for anchor supports, as well as fixing of the load-bearing members relative to bodies 4.1, 6.1, 7.1, 9. Here, rail bodies 4.1, 9 of the rail cords are made with at least two upper rolling surfaces 4.6, 9.5, correspondingly, or with four rolling surfaces 4.6, 4.7, 9.5, 9.6, correspondingly, and form the main rail track on the main length of rail cord for the movement of wheeled vehicles, and an auxiliary rail cord track on the auxiliary rail cord.

Alongside with the formation of load-bearing members 4.3, 6.2, 7.2 when suspending and stretching the load-bearing structure elements 4.4, 6.3, 7.3 between the supports, laying and fastening of communication channels 4.8, 9.7 and communication and transport channels 6.5, 7.5 is carried out, with their further fixing in bodies 4.1, 6.1, 7.1 and 9, correspondingly.

Then, unfastening of the upper and lower chords of the truss structure is carried out by a sequence of regularly oriented rod elements 8 distributed along its entire length. Here, their connecting assemblies 8.1 with the main length of rail cord are secured with bases 4.2 of the extended rail bodies for the main length of rails 4 (in beamless embodiment as shown in Fig. 3), or with the extended body 6.1 of main beam 6. The main beam body is, in its turn, connected along the whole length of the track with bodies 4.1 (bases 4.2) of the main length of rails, as shown in Fig. 2, whereas connecting assemblies 8.2 of rod elements with the auxiliary rail cord are secured on body 7.1 of the auxiliary rail cord.

Preliminarily, rail bodies 4.1 of the main length of rail cord and rail bodies 9 (if available) of the auxiliary rail cord are connected, along the whole length of the track, with body 6.1 of main beam 6 placed between them, for the main cord and body 7.1 of the auxiliary rail cord, correspondingly, with the formation of monolithic chords of the track structure.

If auxiliary rail cord 7 and/or main beam 6 are made in the form of tubes, communication and transport channels 7.5 and/or 6.5, correspondingly, are previously placed in their bodies 7.1 and/or 6.1. Pipelines are laid in these communication and transport channels for the transportation of liquids or gases, and/or power supply and/or communications lines. Then, a vacant part of the cavity inside the mentioned bodies is fully or partially filled with elements 7.3 and/or 6.3 of the load-bearing structure in accordance with the design calculation, forming pre-stressed load-bearing members.

## Claims

1. A communications system that comprises at least one trussed track structure (3) consisting of at least one main length of rail cord (4) installed on the foundation (1) resting on the supports (2), and at least one auxiliary rail cord (7) located at a different level, wherein:
the main length of rail cord (4) at the span between the adjacent supports (2) is connected with the auxiliary rail cord (7) by a sequence of regularly oriented rod elements (8), whose longitudinal axes together with the longitudinal axes of the main and auxiliary rail cords (4, 7) form triangles, with the tops in the connections of rod elements regularly distributed (8) with each other, and alternately - with the main and auxiliary rail cords (4, 7);
wherein:
the main length of rail cord (4) comprises two rail bodies (4.1) lying opposite relative to the median plane (5) and connected with each other;
the connections of the regularly oriented rod elements (8) and the main length of rail cord (4) throughout the whole length of the trussed track structure (3) are
- rigidly connected with the main beam (6) located between the rail bodies (4.1), and the main beam (6), in its turn, is rigidly connected with the opposing bases (4.2) of two rail bodies (4.1), or
- rigidly connected with the opposing bases of rail bodies (4.1);
wherein the height *h*, m, of the main length of rail cord body and the height *H*, m, of the trussed track structure (3) are connected by the ratio: $5 \leq H / h \leq 50 ,$ whereas the rolling surfaces (4.6, 4.7) made at an angle to the horizon within 1° to 45° and forming the main rail track for wheeled vehicles are adjacent to the rail bodies (4.1),
**characterized in that** the main length of rail cord (4) is made in the form of a pre-stressed load-bearing member (6.2) enclosed in the extended body (6.1), with the rolling surface (4.6, 4.7) for wheeled vehicles adjacent to it,
the auxiliary rail cord (7) is made in the form of a pre-stressed load-bearing member (7.2) enclosed in the extended body (7.1),
the extended body (7.1) of the auxiliary rail cord (7) comprises two rail bodies (9) lying opposite relative to the median plane (5) and connected with each other, between which an auxiliary beam is placed, and
the rolling surfaces (9.5, 9.6) forming the auxiliary track are made at an angle to the horizon within 1° to 45° and forming an auxiliary rail cord track for wheeled vehicles are adjacent to the rail bodies of the auxiliary rail cord (7).

2. The system as claimed in claim 1 wherein the main beam (6) comprises an extended body (6.1) in the form of a circular or shaped tube, with placing at least one pre-stressed load-bearing member in its body or without placing a load-bearing member in its body.

3. The system as claimed in claim 1 wherein the main beam (6) is made in the form of an I-beam or a channel section, or a combination of strips.

4. The system as claimed in claim 1 wherein the auxiliary beam (7) comprises an extended body (7.1) in the form of a tube, with or without placing a pre-stressed load-bearing member in its body, or in the form of an I-beam or a channel section, or a combination of strips.

5. The system as claimed in claim 1, wherein any of the rail bodies (4.1, 9) in cross section is represented as a closed section, with filling or without filling the space inside the mentioned bodies with the load-bearing members, or as an open section or a strip.

6. The system as claimed in any of claims 1, 2, 5, wherein the load-bearing members of the main beam (6) and/or auxiliary beam (7), and/or rail bodies (4.1, 9) are made by placing the load-bearing structure, comprising pre-stressed extended elements, in the corresponding bodies of the main beam and/or auxiliary beam, and/or rail bodies, filling the cavities in the bodies between the load-bearing structure elements with a hardening material based on polymer binders, composites or cement mixtures.

7. The system as claimed in claim 6 wherein the pre-stressed extended elements of the load-bearing structure are made of steel wire and/or rods, and/or steel twisted or untwisted cables, and/or cords, strips, bands, pipes.

8. The system as claimed in any of claims 1, 2, 5, wherein the load-bearing members of the main length of rail cord (4) and auxiliary rail cord (7) are stretched onto anchor supports with the force chosen according to the ratio: $0.2 \leq {T}_{1} / {T}_{2} \leq 5 ,$
where: *T₁*, N - tension force of load-bearing members for the main length of rail cord;
*T₂*, N - tension force of load-bearing members for the auxiliary rail cord.

9. The system as claimed in claims 1-7 wherein the areas of:
*S***₁**, m² - cross section of the main beam, *S***₂**, m² - cross section of rail bodies for the main length of rail cord, *S***₃**, m² - cross section of the auxiliary beam and *S***₄**, m² - cross section of rail bodies for the auxiliary rail cord, are chosen based on the ratio: $0.2 \leq \frac{{S}_{1} + {S}_{2}}{{S}_{3} + {S}_{4}} \leq 5 .$

10. The system as claimed in claims 1, wherein the regularly oriented rod elements are made in the form of a T-profile, I-beam, channel section, L-shape or a strip, or in the form of pipes.

11. The system as claimed in claims 1-10, wherein the main length of rail cord body and/or the auxiliary rail cord body, and/or rail bodies of the main length of rail cord, and/or the auxiliary rail cord are made with a possibility of locating communication and transport channels in them to allow pipeline laying to transport liquids or gases and/or to locate power supply and communications lines.

## Patentansprüche

1. Ein Transportsystem, das umfasst mindestens eine fachwerkartige Gleisstruktur (3) bestehend aus mindestens einer Hauptlänge eines Schienenstrangs (4), der auf der Gründung (1) installiert ist und auf den Stützen (2) aufliegt, und mindestens einem auf einer anderen Ebene befindlichen Hilfsschienenstrang (7), wobei:
die Hauptlänge des Schienenstrangs (4) an der Spannweite zwischen den benachbarten Stützen (2) mit dem Hilfsschienenstrang (7) durch eine Abfolge von regelmäßig orientierten Stabelementen (8) verbunden ist, deren Längsachsen zusammen mit den Längsachsen der Haupt- und Hilfsschienenstränge (4, 7) Dreiecke bilden, wobei die Spitzen bei den Verbindungen von Stabelementen untereinander (8) und wechselweise mit den Haupt- und Hilfsschienensträgen (4, 7) regelmäßig verteilt angeordnet sind;
wobei:
die Hauptlänge des Schienenstrangs (4) zwei zu der Mittelebene (5) gegenüberliegende und miteinander verbundene Schienenkörper (4.1) aufweist;
die Verbindungen der regelmäßig orientierten Stabelemente (8) und die Hauptlänge des Schienenstrangs (4) über die gesamte Länge der fachwerkartigen Gleisstruktur (3)
- starr mit dem zwischen den Schienenkörpern (4.1) befindlichen Hauptträger (6) verbunden sind, und der Hauptträger (6) seinerseits starr mit den gegenüberliegenden Böden (4.2) zweier Schienenkörper (4.1) verbunden ist, oder
- starr mit den gegenüberliegenden Böden von Schienenkörpern (4.1) verbunden sind;
wobei die Höhe h, m der Hauptlänge des Schienenstrangkörpers und die Höhe h, m der fachwerkartigen Gleisstruktur (3) durch das Verhältnis $5 \leq H / h \leq 50 ,$ verbunden sind während die unter einem Winkel zum Horizont innerhalb von 1° bis 45° angestellten und die Hauptschienenbahn für Radfahrzeuge bildenden Abrollflächen (4.6, 4.7) an die Schienenkörper (4.1) angrenzen,
**dadurch gekennzeichnet, dass**
die Hauptlänge des Schienenstrangs (4) in Form eines in dem langgestreckten Körper (6.1) eingeschlossenen, vorgespannten lasttragenden Elementes (6.2) mit der daran angrenzenden Abrollfläche (4.6, 4.7) für Radfahrzeuge ausgebildet ist,
der Hilfsschienenstrang (7) ist in Form eines in dem langgestreckten Körper (7.1) eingeschlossenen, vorgespannten lasttragenden Elementes (7.2) ausgebildet ist,
der langgestreckte Körper (7.1) des Hilfsschienenstrangs (7) zwei zu der Mittelebene (5) gegenüberliegende und miteinander verbundene Schienenkörper (9) aufweist, zwischen denen ein Hilfsträger angeordnet ist, und
die das Hilfsgleis bildenden Abrollflächen (9.5, 9.6), welche in einem Winkel zum Horizont innerhalb von 1° bis 45° ausgebildet sind und eine Hilfsschienenstranglaufbahn für Radfahrzeuge bilden, benachbart zu den Schienenkörpern des Hilfsschienenstranges (7) angeordnet sind.

2. Das System nach Anspruch 1, wobei der Hauptträger (6) einen langgestreckten Körper (6.1) in Form eines kreisförmigen oder geformten Rohres aufweist, wobei mindestens ein vorgespanntes lasttragendes Element in seinem Körper angeordnet ist oder kein lasttragendes Element in seinem Körper angeordnet ist.

3. Das System nach Anspruch 1, wobei der Hauptträger (6) in Form eines I-Trägers oder eines Kanalabschnitts oder einer Kombination von Bändern ausgebildet ist.

4. Das System nach Anspruch 1, wobei der Hilfsträger (7) einen langgestreckten Körper (7.1) in Form eines Rohres, mit oder ohne Einlegen eines vorgespannten lasttragenden Elementes in dessen Körper, oder in Form eines I-Trägers oder eines Kanalabschnitts oder einer Kombination von Bändern aufweist.

5. Das System nach Anspruch 1, wobei jeder der Schienenkörper (4.1, 9) im Querschnitt als geschlossenes Profil mit Füllung oder ohne Füllung des Raumes innerhalb der genannten Körper mit den lasttragenden Elementen oder als offenes Profil oder Band ausgebildet ist.

6. Das System nach einem der Ansprüche 1, 2, 5, wobei die lasttragenden Elemente des Hauptträgers (6) und/oder Hilfsträgers (7) und/oder Schienenkörpers (4.1, 9) durch Einlegen der lasttragenden Struktur gebildet sind, die vorgespannte langgestreckte Elemente in den entsprechenden Körpern des Haupt- und/oder Hilfsträgers und/oder der Schienenkörper aufweist, unter Ausfüllung der Hohlräume in den Körpern zwischen den lasttragenden Strukturelementen mit einem aushärtenden Material auf Basis von Polymerbindemitteln, Verbundwerkstoffen oder Zementmischungen.

7. Das System nach Anspruch 6, wobei die vorgespannten langgestreckten Elemente der lasttragenden Struktur aus Stahldraht und/oder Stäben und/oder aus gedrehte oder nicht-gedrehte Stahlkabeln und/oder Seilen, Streifen, Bändern, Rohren bestehen.

8. Das System nach einem der Ansprüche 1, 2, 5, wobei die lasttragenden Elemente der Hauptlänge des Schienenstrangs (4) und des Hilfsschienenstrangs (7) auf Ankerträger mit einer Kraft aufgespannt werden, die gemäß dem Verhältnis $0.2 \leq {T}_{1} / {T}_{2} \leq 5$ gewählt ist,
wobei: *T₁*, die N-Spannkraft von lasttragenden Elementen für die Hauptlänge des Schienenstrangs; und
*T₂*, die N-Spannkraft von lasttragenden Elementen für das Hilfsschienenstrang ist.

9. Das System nach den Ansprüchen 1 bis 7, wobei die Bereiche von
*S***₁**, m² - Querschnitt des Hauptträgers, *S***₂**, m² - Querschnitt von Schienenkörpern für die Hauptlänge des Schienenstrangs, *S***₃**, m² - Querschnitt des Hilfsträgers und *S***₄**, m² - Querschnitt von Schienenkörpern für den Hilfsschienenstrang, bezogen auf das Verhältnis $0.2 \leq \frac{{S}_{1} + {S}_{2}}{{S}_{3} + {S}_{4}} \leq 5$ gewählt werden.

10. Das System nach Anspruch 1, wobei die regelmäßig orientierten Stabelemente als T-Profil, I-Träger, Kanalabschnitt, L-Form oder Bänder oder in Form von Rohren ausgebildet sind.

11. Das System nach den Ansprüchen 1 bis 10, wobei die Hauptlänge des Schienenstrangkörpers und/oder der Hilfsschienenstrangkörper und/oder die Schienenkörper der Hauptlänge des Schienenstrangs und/oder der Hilfsschienenstrang mit der Möglichkeit zur Anordnung innerhalb denselben von Kommunikations- und Transportkanälen versehen sind, um eine Rohrleitungsverlegung zum Transport von Flüssigkeiten oder Gasen und/oder zur Anordnung von Stromversorgungs- und Kommunikationsleitungen zu ermöglichen.

## Revendications

1. Un système de communicationcomprend au moins une structure (3) de voie en treillis constituée d'au moins une longueur principale de membrure (4) de rail installée sur le soubassement (1) reposant sur les supports (2), et au moins une membrure (7) de rail auxiliaire située à un niveau différent, où:
la longueur principale de la membrure (4) de rail au niveau de la travée entre les supports adjacents (2) est reliée à la membrure (7) de rail auxiliaire par une séquence d'éléments de tige (8) régulièrement orientés, dont les axes longitudinaux forment des triangles avec les axes longitudinaux des membrures (4, 7) de rail principale et auxiliaire, les sommets des connexions des éléments de tige (8) régulièrement répartis les uns avec les autres, et alternativement - avec les membrures (4, 7) de rail principale et auxiliaire;
où: la longueur principale de membrure (4) de rail comprend deux corps (4.1) de rail opposés par rapport au plan médian (5) et reliés entre eux;
les connexions des éléments de tige (8) régulièrement orientés et la longueur principale de la membrure (4) de rail sur toute la longueur de la structure (3) de voie en treillis sont
- reliées rigidement à la poutre principale (6) située entre les corps (4.1) de rail, et la poutre principale (6) est à son tour reliée rigidement aux bases opposées (4.2) de deux corps (4.1) de rail, ou
- reliées rigidement aux bases opposées des corps (4.1) de rail;
où la hauteur *h*, m, de la longueur principale du corps de membrure de rail et la hauteur *H*, m, de la structure (3) de voie en treillis sont reliées par le rapport: $5 \leq H / h \leq 50 ,$
tandis que les surfaces de roulement (4.6, 4.7) réalisées avec un angle par rapport à l'horizon compris entre 1° et 45° et formant la voie principale pour les véhicules à roues sont adjacentes aux corps (4.1) de rail,
**caractérisé en ce que** la longueur principale de membrure (4) de rail est réalisée sous la forme d'un élément porteur précontraint (6.2) renfermé dans le corps allongé (6.1), la surface de roulement (4.6, 4.7) pour les véhicules à roues étant adjacente à celle-ci,
la membrure (7) de rail auxiliaire est réalisée sous la forme d'un élément porteur précontraint (7.2) renfermé dans le corps allongé (7.1),
le corps étendu (7.1) de la membrure (7) de rail auxiliaire comprend deux corps (9) de rail opposés par rapport au plan médian (5) et reliés l'un à l'autre, entre lesquels est placée une poutre auxiliaire, et
les surfaces de roulement (9.5, 9.6) formant la voie auxiliaire sont réalisées avec un angle par rapport à l'horizon compris entre 1° et 45° et formant une voie auxiliaire de membrure de rail pour véhicules à roues sont adjacentes aux corps de rail de la membrure (7) de rail auxiliaire.

2. Le système selon la revendication 1, dans lequel la poutre principale (6) comprend un corps allongé (6.1) sous la forme d'un tube circulaire ou modelé, avec placement d'au moins un élément porteur précontraint dans son corps ou sans placement d'un élément porteur dans son corps.

3. Le système selon la revendication 1, dans lequel la poutre principale (6) est réalisée sous la forme d'une poutre en I ou d'une section de canal, ou d'une combinaison de bandes.

4. Le système selon la revendication 1, dans lequel la poutre auxiliaire (7) comprend un corps allongé (7.1) sous la forme d'un tube, avec ou sans placement d'un élément porteur précontraint dans son corps, ou sous la forme d'une poutre en I ou d'une section de canal, ou une combinaison de bandes.

5. Le système selon la revendication 1, dans lequel quelconque des corps de rail (4.1, 9) en section transversale est représenté comme une section fermée, avec ou sans remplissage de l'espace à l'intérieur des corps mentionnés avec les éléments porteurs, ou comme une section ouverte ou une bande.

6. Système selon quelconque des revendications 1, 2, 5, dans lequel les éléments porteurs de la poutre principale (6) et/ou de la poutre auxiliaire (7), et/ou des corps (4.1, 9) de rail sont réalisés en plaçant la structure porteuse, comprenant des éléments allongés précontraints, dans les corps correspondants de la poutre principale et/ou de la poutre auxiliaire, et/ou des corps de rails, en remplissant les cavités dans les corps entre les éléments de la structure porteuse avec un matériau durcissant à base de liants polymères, de composites ou de mélanges de ciment.

7. Le système selon la revendication 6, dans lequel les éléments allongés précontraints de la structure porteuse sont constitués de fils et/ou de tige en acier, et/ou câbles en acier torsadés ou non, et/ou cordons, bandes, rubans, tuyaux.

8. Le système selon quelconque des revendications 1, 2, 5, dans lequel les éléments porteurs de la longueur principale de la membrure (4) de rail et de la membrure (7) de rail auxiliaire sont tendus sur des supports d'ancrage avec la force choisie en fonction du rapport: $0,2 \leq {T}_{1} / {T}_{2} \leq 5 ,$
où: *T₁*, N - force de tension des éléments porteurs pour la longueur principale de la membrure de rail;
*T₂*, N - force de tension des éléments porteurs pour la membrure de rail auxiliaire.

9. Le système selon les revendications 1-7 dans lequel les surfaces de:
*S***₁**, m² - section transversale de la poutre principale, *S***₂**, m² - section transversale des corps de rail pour la longueur principale de la membrure de rail, *S***₃**, m² - section transversale de la poutre auxiliaire et *S***₄**, m² - section transversale des corps de rails pour la membrure de rail auxiliaire, sont choisis en fonction du rapport: $0.2 \leq \frac{{S}_{1} + {S}_{2}}{{S}_{3} + {S}_{4}} \leq 5 .$

10. Le système selon la revendication 1, dans lequel les éléments de tige régulièrement orientés sont réalisés sous la forme d'un profilé en T, d'une poutre en I, d'une section de canal, d'une forme en L ou d'une bande, ou sous la forme de tuyaux.

11. Le système selon les revendications 1-10, dans lequel la longueur principale du corps de la membrure de rail et/ou le corps de la membrure de rail auxiliaire, et/ou les corps de rail de la longueur principale de la membrure de rail, et/ou la membrure de rail auxiliaire sont réalisés avec une possibilité de placer dans ceux-ci des voies de communication et de transport pour permettre la pose de pipelines pour le transport de liquides ou de gaz et/ou pour placer les lignes d'alimentation électrique et de communication.
